# EUROPEAN PATENT APPLICATION

(11) **EP 4 439 921 A2**
(43) Date of publication of application: **02.10.2024**
(21) Application number: 24167561.0
(22) Date of filing: 28.03.2024
(51) Int. Cl.: H02J 7/00

(54) **A BATTERY PACK AND A METHOD OF OPERATING A BATTERY PACK**

(30) Priority: 01.04.2023 IN 202311025030
(71) Applicant: Schneider Electric IT Corporation, Foxboro, MA 02035 (US)
(72) Inventor: NAGABHUSHANRAO, PRADEEP TOLAKANAHALLI, ANDOVER, 01810 (US); JIVANANI, ANURAG ARJUNDAS, ANDOVER, 01810 (US); JAYARAMAN, CHANDRASEKARAN, ANDOVER, 01810 (US); PETROVIC, LUKA, ANDOVER, 01810 (US)
(74) Representative: Plasseraud IP

(57) **Abstract**

According to at least one aspect of the present disclosure a battery pack is provided. The battery pack includes a voltage converter configured to increase a voltage of the power in a boost mode of operation and to decrease the voltage of the power in a buck mode of operation, the voltage converter including: a first connection coupled to the bus connection, a second connection coupled to the battery, an inductor, a first diode coupled to the inductor and to a reference node, and a second diode coupled to the inductor and to the reference node; and at least one controller configured to operate the voltage converter in the boost mode of operation responsive to receiving a signal to operate in the boost mode of operation, and operate the voltage converter in a buck mode of operation responsive to receiving a signal to operate in the buck mode of operation.

## Description

### BACKGROUND

### 1. Field of the Disclosure

At least one example in accordance with the present disclosure relates generally to controlling the voltage of power provided to or from a battery.

### 2. Discussion of Related Art

Power devices, such as uninterruptible power supplies (UPSs), may be used to provide regulated, uninterrupted power for sensitive and/or critical loads, such as computer systems and other data-processing systems. Existing UPSs include online UPSs, offline UPSs, line-interactive UPSs, as well as others. UPSs may provide output power to a load. The output power may be derived from a primary source of power, such as a utility-mains source, and/or derived from a back-up source of power, such as an energy-storage device.

### SUMMARY

The disclosure is defined in the appended independent claims. Dependent claims constitute embodiments of the disclosure. In the present description and drawings, any examples and technical descriptions of apparatuses products and/or methods which are not covered by the claims should be taken as background art or examples useful for understanding the disclosure.

### BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 illustrates a power system according to an example;
FIG. 2 illustrates a battery pack according to an example;
FIG. 3A illustrates a process for boosting a voltage using a voltage converter according to an example;
FIG. 3B illustrates a parallel process for synchronous rectification according to an example;
FIG. 4A illustrates a process for bucking a voltage according to an example; and
FIG. 4B illustrates a parallel process for synchronous rectification according to an example.

### DETAILED DESCRIPTION

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms.

Batteries have chemistries and characteristics that can pose challenges in certain applications. For examples, when connected in parallel to provide or receive power, batteries of different internal chemistries may have different voltages, discharge and charge rates, stored charge, and so forth. As a result, it may not be effective to charge or discharge batteries in parallel in an efficient manner simply by connecting the batteries in parallel to a charging bus. Likewise, batteries may have different charging needs. For example, a given battery may be able to charge rapidly when its internal voltage is within a certain range, but may need to charge less rapidly when the voltage is above or below a threshold voltage level (for example, when the battery is nearly fully charged and has a corresponding fully charged voltage level).

Aspects and elements of the present disclosure relate to a battery pack configured to adjust the voltage provided by the battery or received by the battery. In some examples, the battery pack uses a circuit that can increase (boost) or decrease (buck) a voltage, called a "buck/boost circuit" or "voltage converter." By boosting and bucking the voltage, the voltage converter allows the battery to be placed in parallel with other batteries (for example, to charge and discharge) without regard to the internal chemistry or other internal characteristics of the batteries.

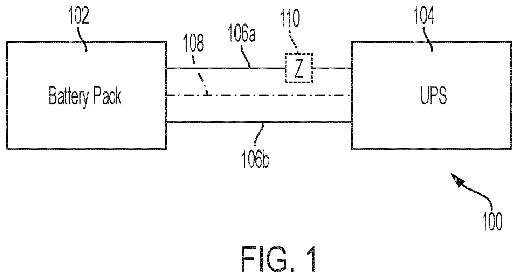

FIG. 1 illustrates a power system 100 according to an example. The power system 100 includes a battery pack 102, an uninterruptible power supply (UPS) 104, a charging bus 106a, a return bus 106b, a communications connection 108, and, in some examples, an optional impedance 110.

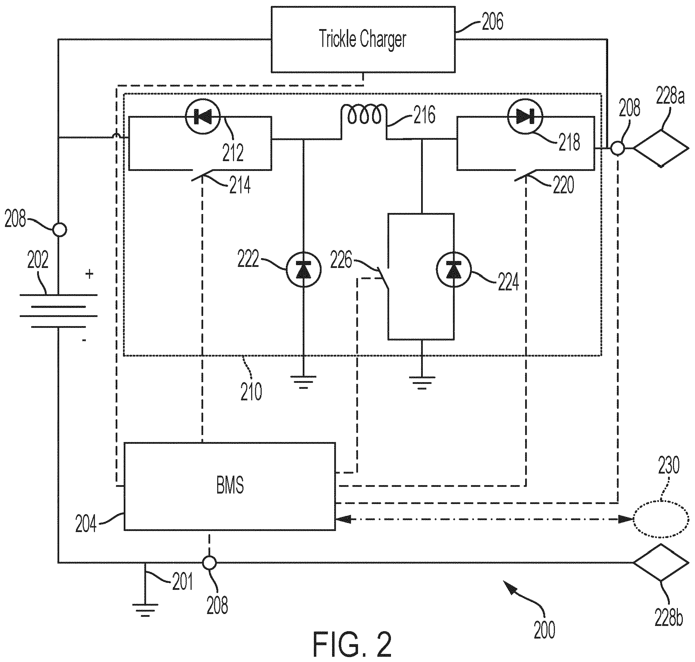

The battery pack 102 is configured to provide backup power to the UPS 104 at least when the UPS 104 does not have access to acceptable power from a different power source (for example, a utility mains supply). The battery pack 102 may be further configured to receive charging power from the UPS 104 when the UPS 104 has acceptable power available from a different power source. The battery pack 102 may contain one or more batteries, and the batteries may be connected in series and/or parallel within the battery pack 102. The battery pack 102 will be discussed in greater detail with respect to FIG. 2.

The UPS 104 may be implemented according to any of various UPS topologies. The UPS 104 may be connected to, and receive input power from, a main power source (such as a utility power grid or a main power generator) and the battery pack 102. The UPS 104 may further be connected to, and provide uninterrupted power to, one or more loads. When main power is available (for example, utility grid power or power from a generator), the UPS directs the main power to the one or more loads and may direct the main power to the battery pack 102 (or battery packs, if more than one battery pack is present) to recharge one or more batteries of the battery pack 102. In many examples, the charging bus 106a carries power from the battery pack 102 to the UPS 104 or from the UPS 104 to the battery pack 102, while the return bus 106b is a reference node. Accordingly, while the charging bus 106a is referred to with the word "charging," discharged power (that is, power discharged from the battery pack 102 to the UPS 104) may also be provided via the charging bus 106a.

The UPS 104 and battery pack 102 may be configured to communicate with one another. In some examples, the UPS 104 and battery pack 102 communicate via the communications connection 108. The communications connection 108 may include a physical communication medium of the power system 100, for example, an Ethernet cable, a phone cord, and/or a wire or set of wires configured to carry information from one device to another. In other examples, the communications connection 108 may include one or more components to facilitate wireless communication, for example, a wireless transceiver or other device.

The optional impedance 110 may include a capacitor, inductor, or other device capable of storing charge and/or energy. In some examples, the optional impedance 110 includes a capacitor. The optional impedance 110 may be coupled between the battery pack 102 and the UPS 104, or the optional impedance 110 may be part of the battery pack 102 or UPS 104. For example, the optional impedance 110 may include a capacitor located on the portion of the charging bus 106a located within the UPS 104.

FIG. 2 illustrates a battery pack 200 according to an example. The battery pack 102 of FIG. 1 may be implemented according to the topology and characteristics of the battery pack 200 of FIG. 2. That is, the battery pack 200 of FIG. 2 represents at least one embodiment of the battery pack 102 of FIG. 1, and the battery pack 200 of FIG. 2 may be substituted for the battery pack 102 of FIG. 1 with respect to the discussion of FIG. 1.

The battery pack 200 includes a reference node 201, at least one battery 202 ("battery 202"), a battery management system (BMS) 204, a trickle charger 206, one or more sensors 208, a voltage converter 210, a first connection 228a (or a "charging bus connection 228a"), a second connection 228b (or a "return bus connection 228b"), and a communications connection 230. The voltage converter 210 includes a first diode 212, a first switch 214, an inductive element 216 ("inductor 216"), a second diode 218, a second switch 220, a third diode 222, a fourth diode 224, and a third switch 226. In some examples, the first diode 212 and the first switch 214, the second diode 218 and the second switch 220, and the fourth diode 224 and the third switch 226 may each be implemented as a single physical switching device, but are represented by an ideal switch and an intrinsic body diode.

The battery 202 is coupled to at least one of the one or more sensors 208, the trickle charger 206, and the voltage converter 210. In some examples, the battery 202 is coupled to the voltage converter 210 via the first diode 212 and the first switch 214. The battery 202 may also be coupled to the second connection 228b. In examples where the battery 202 includes more than one battery, the constituent batteries of the battery 202 may be coupled together with one another in parallel and/or series.

The trickle charger 206 is coupled to the battery 202, the first connection 228a, and the voltage converter 210. In some examples, the trickle charger 206 is coupled to the voltage converter 210 via both the combination of the first diode 212 and the first switch 214 and the combination of the second diode 218 and the second switch 220.

The one or more sensors 208 may be located in various positions within the battery pack 200. For example, at least one sensor may be implemented to sense a voltage across the first connection 228a and the second connection 228b, to sense a voltage across the battery 202, to sense a current provided to and/or received from the battery 202 via the first and second connections 228a, 228b, and so forth.

The BMS 204 may be coupled to one or more of the one or more sensors 208, the first, second, and/or third switches 214, 220, 226, the trickle charger 206, and/or the communication connection 230.

The voltage converter 210 may have a first converter connection and a second converter connection, the first connection being coupled to the battery 202 and the second connection being coupled to the first connection 228a. Within the voltage converter 210, the first diode 212 and first switch 214 may be coupled in parallel with one another and further be coupled to the inductor 216 and the third diode 222. The inductor 216 may be coupled to each of the first, second, third, and/or fourth diodes 212, 218, 222, 224. The inductor 216 may be coupled to the first, second, and/or third switches 214, 220, 226. The inductor 216 may have a first inductor connection coupled to the first diode 212 and a second inductor connection coupled to the second diode 218. In some examples, the second diode 218, second switch 220, fourth diode 224 and third switch 226 are coupled to the second inductor connection of the inductor 216. In some examples, the first diode 212, first switch 214, and third diode 222 are coupled to the first inductor connection of the inductor 216. The second diode 218 and second switch 220 may be coupled in parallel with one another and further be coupled to the inductor 216, the fourth diode 224, and the third switch 226. The fourth diode 224 and third switch 226 may be coupled in parallel with one another and further coupled to a reference node (such as a reference node 201 to which the second connection 228b is coupled) as well as to the inductor 216, the second diode 218, and the second switch 220. The third diode 222 may be coupled to the reference node 201 as well as the first diode 212, first switch 214, and/or inductor 216. In examples where the reference node 201 corresponds to the second connection 228b and/or the bus of the battery pack 200 coupled to the second connection 228b, anything coupled to the second connection 228b may also be coupled to the battery 202.

In some examples, a cathode of the first diode 212 is coupled to the battery 202 and an anode of the first diode 212 is coupled to the inductor 216. In some examples, a cathode of the second diode 218 is coupled to the first connection 228a and an anode of the second diode 218 is coupled to the inductor 216. In some examples, a cathode of the third diode 222 is coupled to the inductor 216. In some examples, a cathode of the fourth diode 224 is coupled to the inductor 216. In some examples, the cathode of the third diode 222 is coupled to the anode of the first diode 212. In some examples, the cathode of the fourth diode 224 is coupled to the anode of the second diode 218.

The battery 202 may include any of various types of battery or energy-storage device. The battery 202 may have an internal chemistry suitable for storing power and/or energy. In some examples, the battery 202 may be a rechargeable battery.

The BMS 204 is configured to control at least the switches 214, 220, 226 of the battery pack 200, as well as the trickle charger 206. In some examples, the BMS 204 may include a controller, processor, circuit, and/or other device or collection of devices capable of controlling the battery pack 200. The BMS 204 may control the switches 214, 220, 226 to close (that is, create a conducting path across the terminals of the switch) or open (that is, create an open circuit condition, such as break in the conducting path between the terminals of the switch). The BMS 204 may control each switch individually, such that when one switch is open the others may be closed or open independent of the state of any other switch. The BMS 204 may also control the trickle charger 206 to be in an on state (that is, providing trickle charging) or an off state (that is, not providing trickle charging). The BMS 204 may also be coupled to the one or more sensors 208. In some examples, the BMS 204 is configured to receive, from the one or more sensors 208, sensed information indicative of the voltage across the connections 228a, 228b, the voltage across the battery 202, and/or the current through (either to or from) the battery 202. The BMS 204 may be configured to communicate with external devices. In some examples, the BMS 204 may be configured to communicate with a UPS (for example, the UPS 104) or other external power system. The BMS 204 may transmit and/or receive any information, such as voltage, current, power, energy, and/or state-of-charge (SOC) information, and/or other types of power-system-related information.

The trickle charger 206 is configured to provide trickle charging to the battery 202 under certain conditions. Trickle charging may include charging the battery 202 at a rate equal to the discharge rate of the battery 202 when the battery 202 is not actively discharging power, thus ensuring the battery 202 remains at a substantially constant SOC. Trickle charging may also include charging the battery 202 at a slower rate when the battery 202 is near a desired voltage level (such as a maximum voltage level or an optimum voltage level) such that the battery 202 is not overcharged. Trickle charging may also be used when the battery 202 is in a state of deep discharge (that is, the SOC is very low), to allow the battery 202 to recover from the state of deep discharge without suffering damage.

The first connection 228a is a connection node through which a bus, such as the charging bus 106a, may connect to the battery pack 102. The second connection 228b is a connection node through which a bus, such as the return bus 106b, may connect to the battery pack 102. The communications connection 230 may include a wired connection port (such as an Ethernet port) or a wireless connection (such as a wireless transceiver) with which the BMS 204 may communicate with external devices, such as a UPS.

The voltage converter 210 is a circuit configured to increase (boost) and/or reduce (buck) voltages of power passing through the voltage converter 210. The voltage converter 210 may operate in a boost mode of operation, where the voltage converter 210 may increase the voltage of power, or the voltage converter 210 may operate in a buck mode of operation, where the voltage converter 210 may reduce the voltage of power. The first diode 212 may operate as a freewheeling diode in the buck mode of operation and the second diode 218 may operate as a freewheeling diode in the boost mode of operation. The BMS 204 may control the mode of operation of the voltage converter 210 by controlling the switches 214, 220, 226 of the voltage converter 210 as will be described in greater detail below.

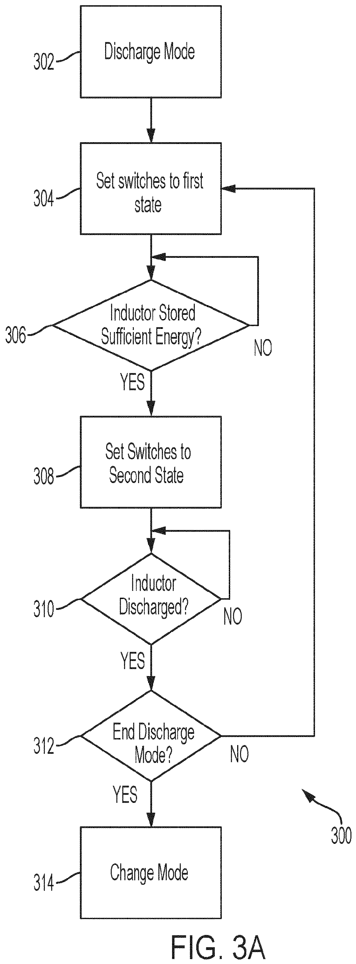

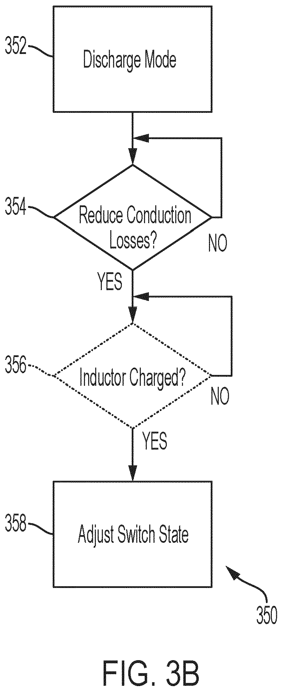

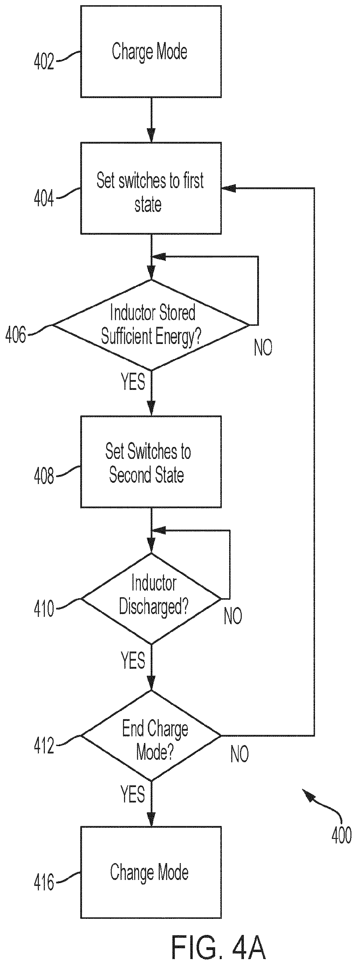

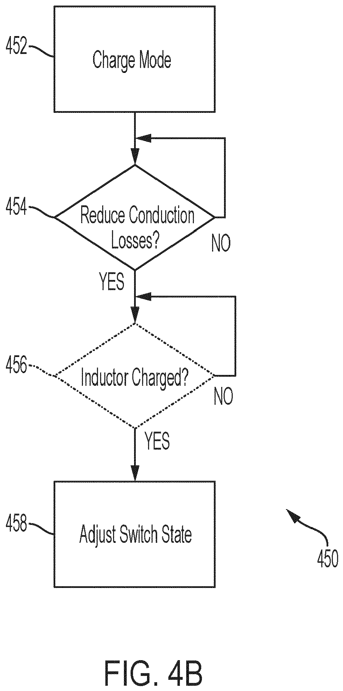

The switches 214, 220, 226 may be operated by the BMS 204 at desired frequencies depending on the mode of operation of the voltage converter 210 such that the switches 214, 220, 226 may effectively allow the voltage converter 210 to create a duty cycle or operate as a synchronous rectifier. The operation of the switches 214, 220, 226 will be described in greater detail with respect to FIGS. 3A, 3B, 4A, and 4B.

The BMS 204 operates the switches 214, 220, 226 such that the inductor 216 accumulates energy over time, and then discharges over time. In some examples, a capacitor or other optional impedance (such as optional impedance 110 of FIG. 1) may be coupled to the first connection 228a and may also store energy for discharge over time. The inductor 216 and possibly the capacitor are used to store energy such that the voltage of power provided by the inductor 216 (or capacitor) during discharge is higher or lower than the voltage of the charging bus 106a (for example, the voltage provided by a UPS).

In some examples, the boost mode of operation of the voltage converter 210 corresponds to a discharge mode of operation of the battery 202, where the battery 202 and the voltage converter 210 are providing boosted power to an external device such as a UPS. In some examples, the buck mode of operation of the voltage converter 210 corresponds to a charge mode of operation of the battery 202, where the battery 202 is receiving bucked power from an external device such as a UPS.

FIG. 3A illustrates a process for increasing the voltage using the voltage converter 210 during a boost mode of operation according to an example. In some examples, FIG. 3 illustrates at least part of the process used by the BMS 204 to control the battery pack 200 during the discharge mode of operation.

At act 302, the BMS 204 controls the battery pack 200 to enter a discharge mode of operation and thus controls the voltage converter 210 in a boost mode of operation. The BMS 204 may control the voltage converter 210 to be in the boost mode of operation responsive to receiving a signal to operate in the boost mode of operation. For example, the signal may be received from the external device, which may include a UPS. In the discharge mode of operation, the BMS 204 operates the voltage converter 210 to boost the voltage of power discharged by the battery 202. The voltage converter 210 provides the boosted power to an external device. In the discharge mode of operation, the trickle charger 206 may be turned off. The process 300 may then continue to act 304.

At act 304, the BMS 204 sets the state of the switches 214, 220, 226 of the voltage converter 210 to be in a first state. The first state corresponds to a time during which the inductor 216 is charged up. In the first state, the first switch 214 may be closed (that is, conducting), the second switch 220 may be open (that is, not conducting), and the third switch 226 may be closed. In this first state, a current loop is formed from the positive terminal of the battery 202 through the first switch 214, through the inductor 216, then through the third switch 226 and to the negative terminal of the battery 202. Due to the lack of large impedances in this current loop, the loop will behave roughly like a short circuit. When the switches 214, 220, 226 are placed in the first state, the current will thus rapidly increase to a very large value. During this process, the inductor 216 will store energy due to the large current passing therethrough. The process 300 may then continue to act 306.

At act 306, the BMS 204 determines if the inductor 216 has stored at least a threshold amount of energy. The threshold amount of energy may correspond to, or be determined based on, a desired degree to which the power is to be boosted. In some examples, the BMS 204 may determine whether a period of time has elapsed since beginning to charge the inductor 216. The threshold amount of time may correspond to, or be determined based on, a desired degree to which the power is to be boosted. The threshold period of time and/or amount of energy may be determined by the user or the design features of the circuit. If the inductor 216 has stored at least the threshold amount of energy or the period of time has elapsed (306 YES), the process may continue to act 308. If the controller determines that the threshold amount of energy or the period of time have not yet been satisfied (306 NO), the process may wait (that is, stay at or return to act 306).

At act 308, the BMS 204 controls the switches 214, 220, 226 to switch to a second state. The second state corresponds to a time during which the inductor 216 is discharged. In the second state, the third switch 226 is opened, while the first switch 214 remains closed and the second switch 220 remains open. Power then flows from the positive terminal of the battery 202 through the first switch 214, the inductor 216, and through the second diode 218 to the first connection 228a (for example, to the optional impedance 110, which may include a capacitor), and then back to the negative terminal of the battery 202 via the second connection 228b. The voltage of the power discharged by the battery 202 is added to the voltage produced across the inductor 216 while the inductor 216 discharges, thereby boosting the voltage of the power output by the battery 202. In examples in which the optional impedance 110 is implemented with a capacitor, the capacitor is charged until the voltage across the capacitor is at a higher level than the voltage of a DC bus, such as the charging bus. The second diode 218 prevents the charge on the capacitor from discharging back to the positive terminal of the battery 202. The process may then continue to act 310.

At act 310, the BMS 204 determines if the inductor 216 is sufficiently discharged of the energy stored during act 304. Being sufficiently discharged may include being discharged of at least a threshold amount of energy. Alternatively, the BMS 204 may wait for a period of time (for example, a predetermined amount of time) corresponding to an amount of time necessary for the inductor 216 to discharge. If the BMS 204 determines that the inductor is discharged or the period of time has elapsed (310 YES), the process 300 may continue to act 312. If the BMS 204 determines the inductor is not discharged or the period of time has not elapsed (310 NO), the process 300 may return to act 310.

At act 312, the BMS 204 determines if the battery pack 200 should remain in discharge mode. The BMS 204 may, for example, determine that no signal has been received from the external device (such as the UPS 104) instructing the battery pack 200 to remain (or not remain) in discharge mode, or may receive a signal indicating that the battery pack 200 should exit the discharge mode. If the BMS 204 determines the battery pack 200 should not remain in discharge mode (312 YES), the process 300 may continue to act 314. If the BMS 204 determines the battery pack 200 should remain in discharge mode (312 NO), the process 300 may return to act 304.

At act 314, the BMS 204 switches the battery pack 200 to a different state and may activate or deactivate the trickle charger 206 or change the state of the switches 214, 220, 226 of the voltage converter 210 depending on which mode of operation the battery pack 200 is switched to. The controller of the BMS 204 may further monitor for a fault condition. The controller may further deactivate the boost mode of operation responsive to detecting a fault condition, i.e., reduce the voltage of the power.

FIG. 3B illustrates a parallel process 350 that can occur during process 300, including, for example, during act 308 of process 300. The process 350 may be executed any number of times during execution of the process 300.

At act 352, the BMS 204 is operating the battery pack 200 in a discharge mode of operation (that is, the battery 202 is providing power to the external device and the voltage converter 210 is boosting the voltage). The process 350 may then proceed to act 354.

At act 354, the BMS 204 determines if the voltage converter 210 should be operated to reduce conduction losses. If the BMS 204 determines the voltage converter 210 should not reduce conduction losses (354 NO), the process 350 may wait (that is, may return to act 354) for a time where the BMS 204 determines that the voltage converter 210 should be operated to reduce conduction losses. If the BMS 204 determines that the voltage converter 210 should be operated to reduce conduction losses, the process 350 continues to optional act 356 or, in examples in which optional act 356 is omitted, directly to act 358. The BMS 204 may determine that the voltage converter 210 should be operated to reduce conduction losses on any basis, but may make the determination based on a current through the inductor 216, an insertion loss due to a switch or diode, and so forth. In some examples, the controller determines that the voltage converter 210 should be operated to reduce conduction losses when a diode is capable of supporting an expected current. For example, in the discharge mode, when current is conducted across the second diode 218, the controller may operate the second switch 220. Likewise, when current is conducted across the first diode 212, the controller may operate the first switch 214. Operating the various switches may include opening and/or closing the switches.

At optional act 356, the BMS 204 may determine if the inductor 216 is sufficiently charged. The BMS 204 may determine the charge of the inductor 216 in a substantially similar manner as act 306, such as by using sensors or based on a period of time (for example, the BMS 204 may assume the inductor 216 is sufficiently charged in the discharge mode of operation based on a set period of time elapsing). If the BMS 204 determines the inductor 216 is sufficiently charged (356 YES), the process 350 may continue to act 358. If the BMS 204 determines the inductor 216 is not sufficiently charged (356 NO), the process 350 may return to act 356 until the BMS 204 determines the inductor 216 is sufficiently charged.

At act 358, the BMS 204 adjusts the state of the switches 214, 220, 226. In particular, the BMS 204 may switch (that is, open and close) the first switch 214 and/or second switch 220 at a desired frequency. The first switch 214 may operate at a frequency greater than a line frequency, and the second switch 220 and the third switch 226 may operate as synchronous rectifiers. When the first switch 214 is open, the third diode 222 may act as a flyback diode for the inductor 216, such that any current discharged from the inductor 216 may pass through the third switch 226 (if the third switch 226 is closed) to the reference node 201, and then return from the reference node 201 through the third diode 222 to the inductor 216.

FIG. 4A illustrates a process 400 for using the voltage converter 210 to buck the voltage of power received at the first connection 228a according to an example. In some examples, FIG. 4 illustrates at least part of the process used by the BMS 204 to control the battery pack 200 during the charge mode of operation.

At act 402, the BMS 204 controls the battery pack 200 to enter a charge mode of operation, and thus controls the voltage converter 210 in a buck mode of operation. The BMS 204 may control the voltage converter 210 to be in the buck mode of operation responsive to receiving a signal to operate in the buck mode of operation. For example, the signal may be received from the external device, which may include a UPS. In the charge mode of operation, an external device, such as a UPS, may provide recharging power to the battery 202 to replenish the energy stored in the battery 202. The process 400 may then continue to act 402.

At act 404, the BMS 204 sets the state of the switches 214, 220, 226 to a first state. In the first state, the BMS 204 can set the second switch 220 to a closed position such that a current can pass through the second switch 220 from the first connection 228a to the inductor 216. The BMS 204 may set the first switch 214 and the third switch 224 to an open position, such that any current from the inductor 216 to the positive terminal of the battery 202 passes through the first diode 212 and cannot pass to the reference node 201 (for example, cannot pass through the third switch 226 to the reference node 201). Thus, during act 404, a conducting loop may exist from the external device to the first connection 228a, through the second switch 220, through the first diode 212 to the positive terminal of the battery 202, and then from the negative terminal of the battery 202 to the second connection 228b and back to the external device. During act 404, the inductor 216 will experience a change in current as the second switch 220 switches from open to closed. As a result, the inductor 216 will store energy as the current passes therethrough. The process 400 may then continue to act 406.

At act 406, the BMS 204 determines if the inductor 216 has stored sufficient energy and/or if a desired period of time has passed. If the BMS 204 determines that either condition has been met (406 YES), the process 400 continues to act 408. If the BMS 204 determines that neither condition has been met (406 NO), the process 400 may return to act 406.

At act 408, the BMS 204 changes the state of the switches 214, 220, 226 to a second state. In the second state, the second switch 220 may be switched from a closed position to an open position. As a result of such a change, the inductor 216 may discharge some stored energy across the first diode 212 to the battery 202. A current loop may be formed where the inductor 216 discharges power through the first diode 212 to the battery 202, with the fourth diode 224 acting as a freewheeling diode for the current to return to the inductor 216. The process 400 may then continue to act 410.

At act 410, the BMS 204 determines whether the inductor 216 has discharged a sufficient amount of stored energy. The BMS 204 may determine that the inductor 216 has discharged a sufficient amount of energy using sensors or by waiting for a period of time to elapse. If the BMS 204 determines that the inductor 216 has discharged a sufficient amount of energy (410 YES), the process 400 continues to act 412. If the BMS 204 determines that the inductor 216 has not discharged a sufficient amount of energy (410 NO), the process 400 may return to act 410.

At act 412, the BMS 204 determines whether the voltage converter 210 and/or battery pack 200 should continue to operate in the charge mode. The BMS 204 may, for example, determine whether any instructions or signals indicating that the battery pack 200 should or should not change mode have been received. If the BMS 204 determines the battery pack 200 and/or voltage converter 210 should not continue to operate in the charge mode (412 YES), the process 400 continues to act 416. If the BMS 204 determines that the battery pack 200 should remain in the charge mode (412 NO), the process 400 may return to act 404.

At act 416, the BMS 204 changes the mode of operation of the battery pack 200 and/or voltage converter 210. The BMS 204 may change the mode of operation to the discharge mode or any other mode of operation (for example, a mode of operation corresponding to providing trickle charging, such as a trickle-charge mode).

FIG. 4B illustrates a parallel process 450 than can occur during process 400, including, for example, during act 408 of process 400. The process 450 may be executed any number of times during execution of the process 400.

At act 452, the BMS 204 is operating the battery pack 200 in a charge mode of operation (that is, the battery 202 is receiving recharging power from the external device and the voltage converter 210 is bucking the voltage). The process 450 may then proceed to act 454.

At act 454, the BMS 204 determines if the voltage converter 210 should be operated to reduce conduction losses. If the BMS 204 determines the voltage converter 210 should not reduce conduction losses (454 NO), the process 450 may wait (that is, may return to act 454) for a time where the BMS 204 determines that the voltage converter 210 should be operated to reduce conduction losses. If the BMS 204 determines that the voltage converter 210 should be operated to reduce conduction losses, the process 450 continues to optional act 456 in examples in which optional act 456 is omitted, directly to act 458. The BMS 204 may determine that the voltage converter 210 should be operated to reduce conduction losses on any basis, but may make the determination based on a current through the inductor, an insertion loss due to a switch or diode, and so forth.

At optional act 456, the BMS 204 may determine if the inductor 216 is sufficiently charged. The BMS 204 may determine the charge of the inductor 216 in a substantially similar manner as act 306, such as by using sensors or based on a period of time (for example, the BMS 204 may assume the inductor 216 is sufficiently charged in the discharge mode of operation based on a set period of time elapsing). If the BMS 204 determines the inductor 216 is sufficiently charged (456 YES), the process 450 may continue to act 458. If the BMS 204 determines the inductor 216 is not sufficiently charged (456 NO), the process 450 may return to act 456 until the BMS 204 determines the inductor 216 is sufficiently charged.

At act 458, the BMS 204 adjusts the state of the switches 214, 220, 226. In particular, the BMS 204 may switch (that is, open and close) the first switch 214 and/or second switch 220 at a desired frequency. The third switch 226 may operate at a frequency greater than the line frequency, and the first switch 214 and the second switch 220 may operate as synchronous rectifiers. When the first switch 214 is open, the third diode 222 may act as a flyback diode for the inductor 216, such that any current discharged from the inductor 216 may pass through the third switch 226 (if the third switch 226 is closed) to the reference node 201, and then return from the reference node 201 through the third diode 222 to the inductor 216.

With respect to the foregoing processes 300, 350, 400, 450, the acts may be executed in any order, and at a high frequency. In some examples, high frequencies may correspond to the switches changing state (from opened to closed and/or closed to open) at a frequency of approximately 50 kHz. In general, the frequency of operation may be selected such that the inductor 216 is kept in a continuous conduction mode.

Various controllers, such as one or more controllers included within the BMS 204 and/or battery pack 200, may execute various operations discussed above. Using data stored in associated memory and/or storage, the one or more controllers also execute one or more instructions stored on one or more non-transitory computer-readable media, which the one or more controllers may include and/or be coupled to, that may result in manipulated data. In some examples, the one or more controllers may include one or more processors or other types of controllers. In one example, the one or more controllers are or include at least one processor. In another example, one or more controllers perform at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

Further examples are provided in the following clauses.

Clause 1. A battery pack comprising:
a battery;
a bus connection configured to allow power to pass between the battery and an external device;
a voltage converter configured to increase a voltage of the power in a boost mode of operation and to decrease the voltage of the power in a buck mode of operation, the voltage converter including:
   a first connection coupled to the bus connection,
   a second connection coupled to the battery,
   an inductor having a first inductor connection coupled to the first connection and a second inductor connection coupled to the second connection,
   a first diode coupled to the first inductor connection and to a reference node, and
   a second diode coupled to the second inductor connection and to the reference node; and
at least one controller configured to
   operate the voltage converter in the boost mode of operation responsive to receiving a signal to operate in the boost mode of operation, and
operate the voltage converter in a buck mode of operation responsive to receiving a signal to operate in the buck mode of operation.

Clause 2. The battery pack of clause 1 further comprising:
a first sensor configured to detect a battery current;
a second sensor configured to detect a voltage at the input; and
a third sensor configured to detect a voltage of the battery.

Clause 3. The battery pack of clause 2 wherein at least one of the first sensor, the second sensor, or the third sensor are configured to provide a respective detected value to the at least one controller.

Clause 4. The battery pack of clause 1 further comprising at least one additional battery coupled in series with the battery.

Clause 5. The battery pack of clause 1 further comprising a trickle charger coupled to the bus connection and to the battery.

Clause 6. The battery pack of clause 6 wherein the first diode operates as a freewheeling diode in the buck mode of operation and the second diode operates as a freewheeling diode in the boost mode of operation.

Clause 7. The battery pack of clause 1 wherein the voltage converter further comprises a first switching device coupled in parallel with the first diode, wherein the first switching device is coupled between the first inductor connection and the reference node.

Clause 8. The battery pack of clause 7 wherein the voltage converter further comprises:
a second switching device coupled in parallel with a third diode, wherein the second switching device is coupled to the battery; and
a third switching device coupled in parallel with a fourth diode, wherein the third switching device is coupled to the bus connection.

Clause 9. The battery pack of clause 8 wherein the controller is further configured to:
operate, in the boost mode of operation,
   the first switching device at a frequency greater than a line frequency, and
   the second switching device and the third switching device as synchronous rectifiers; and
operate, in the buck mode of operation,
   the third switching device at a frequency greater than the line frequency, and
the first switching device and the second switching device as synchronous rectifiers.

Clause 10. The battery pack of clause 1 wherein the controller is further configured to, in the boost mode of operation, deactivate the boost mode of operation responsive to detecting a fault condition.

Clause 11. A method of operating a battery pack, the method comprising:
determining whether power is to be provided to an external device or received from an external device;
responsive to determining that the power is to be provided to the external device or received from an external device, operating at least one switching device of the battery pack as a synchronous rectifier at a frequency higher than a line frequency of the external device;
responsive to determining that the power is to be provided to the external device, boosting a voltage of the power and providing the power to the external device; and
responsive to determining that the power is to be received from an external device, reducing the voltage of the power.

Clause 12. The method of clause 11 further comprising:
responsive to determining that the power is to be received from the external device, determining that the voltage of the power is below a threshold voltage;
responsive to determining that the voltage is below the threshold voltage, routing the power through a trickle charger; and
responsive to determining that the voltage is below the threshold voltage, maintaining a voltage level of the voltage of the power.

Clause 13. The method of clause 11 wherein the frequency is adjustable and determined by at least one controller configured to operate the at least one switching device.

Clause 14. The method of clause 11 further comprising, responsive to determining that the power is to be received from the external device, synchronously rectifying the power to reduce conduction losses.

Clause 15. The method of clause 11 further comprising, responsive to determining that the power is to be provided to the external device, synchronously rectifying the power to reduce conduction losses.

Clause 16. The method of clause 11 further comprising, responsive to determining that the power is to be provided to the external device, monitoring for a fault condition.

Clause 17. The method of clause 16 further comprising reducing, responsive to detecting the fault condition, the voltage of the power.

Clause 18. A non-transitory, computer-readable medium storing thereon instructions for operating a battery pack having a battery and a voltage converter, the instructions instructing at least one processor to:
control the voltage converter to increase a voltage of power responsive to determining that the power is to be provided to an external device;
control the voltage converter to decrease a voltage of the power responsive to determining that the power is to be received from the external device; and
responsive to controlling the voltage converter to increase or decrease the voltage, control at least one switching device of the battery pack to operate as a synchronous rectifier at a frequency higher than a line frequency of the external device.

Clause 19. The non-transitory, computer-readable medium of clause 18 wherein the instructions further instruct the at least one processor to operate at least one other switching device as a synchronous rectifier to reduce conduction losses. Clause 20. The non-transitory, computer readable medium of clause 18 wherein the instructions further instruct the at least one processor to:
determine whether the voltage of the power is within a threshold voltage of the voltage of the battery;
deactivate the voltage converter responsive to determining that the voltage of the power is within the threshold voltage; and
activate a trickle charger responsive to determining that the voltage of the power is within the threshold voltage.

## Claims

1. A battery pack (102; 200) comprising:
a battery (202);
a bus connection (106a) configured to allow power to pass between the battery and an external device;
a voltage converter (210) configured to increase a voltage of the power in a boost mode of operation and to decrease the voltage of the power in a buck mode of operation, the voltage converter including:
a first connection (228a) coupled to the bus connection,
a second connection (228b) coupled to the battery,
an inductor having a first inductor connection coupled to the first connection and a second inductor connection coupled to the second connection,
a first diode (212) coupled to the first inductor connection and to a reference node, and
a second diode (218) coupled to the second inductor connection and to the reference node; and
at least one controller configured to
operate the voltage converter in the boost mode of operation responsive to receiving a signal to operate in the boost mode of operation, and
operate the voltage converter in a buck mode of operation responsive to receiving a signal to operate in the buck mode of operation.

2. The battery pack of claim 1 further comprising:
a first sensor (208) configured to detect a battery current;
a second sensor (208) configured to detect a voltage at the input; and
a third sensor (208) configured to detect a voltage of the battery.

3. The battery pack of any of the above claims further comprising at least one additional battery coupled in series with the battery.

4. The battery pack of any of the above claims further comprising a trickle charger (206) coupled to the bus connection (228a) and to the battery (202).

5. The battery pack of any of the above claims wherein the first diode operates as a freewheeling diode in the buck mode of operation and the second diode operates as a freewheeling diode in the boost mode of operation.

6. The battery pack of any of the above claims wherein the voltage converter further comprises a first switching device (214) coupled in parallel with the first diode (212), wherein the first switching device (214) is coupled between the first inductor connection and the reference node (201).

7. The battery pack of claim 6 wherein the voltage converter further comprises:
a second switching device (220) coupled in parallel with a third diode (222), wherein the second switching device (220) is coupled to the battery (202); and
a third switching device (226) coupled in parallel with a fourth diode (224), wherein the third switching device (226) is coupled to the bus connection.

8. The battery pack of claim 7 wherein the controller is further configured to:
operate, in the boost mode of operation,
the first switching device (214) at a frequency greater than a line frequency, and
the second switching device (220) and the third switching device (226) as synchronous rectifiers; and
operate, in the buck mode of operation,
the third switching device (226) at a frequency greater than the line frequency, and
the first switching device (214) and the second switching device (220) as synchronous rectifiers.

9. The battery pack of any of the above claims wherein the controller is further configured to, in the boost mode of operation, deactivate the boost mode of operation responsive to detecting a fault condition.

10. A method of operating a battery pack, the method comprising:
determining whether power is to be provided to an external device or received from an external device;
responsive to determining that the power is to be provided to the external device or received from an external device, operating at least one switching device of the battery pack as a synchronous rectifier at a frequency higher than a line frequency of the external device;
responsive to determining that the power is to be provided to the external device, boosting a voltage of the power and providing the power to the external device; and
responsive to determining that the power is to be received from an external device, reducing the voltage of the power.

11. The method of claim 10 further comprising:
responsive to determining that the power is to be received from the external device, determining that the voltage of the power is below a threshold voltage;
responsive to determining that the voltage is below the threshold voltage, routing the power through a trickle charger; and
responsive to determining that the voltage is below the threshold voltage, maintaining a voltage level of the voltage of the power.

12. The method of claim 10 further comprising, responsive to determining that the power is to be received from the external device or provided to the external device, synchronously rectifying the power to reduce conduction losses.

13. The method of claim 10 further comprising, responsive to determining that the power is to be provided to the external device, monitoring for a fault condition.

14. The method of claim 13 further comprising reducing, responsive to detecting the fault condition, the voltage of the power.

15. A non-transitory, computer-readable medium storing thereon instructions for operating a battery pack having a battery and a voltage converter, the instructions instructing at least one processor to operate the battery pack according to any of the above method claims 10 to 14.
